(19) Europäisches Patentamt

European Patent Office

Office européen des brevets

(11) **EP 1 019 770 B1**

(12) **EUROPÄISCHE PATENTSCHRIFT**

(45) Veröffentlichungstag und Bekanntmachung des Hinweises auf die Patenterteilung:
**11.01.2006 Patentblatt 2006/02**

(21) Anmeldenummer: **99931186.3**

(22) Anmeldetag: **25.06.1999**

(51) Int Cl.:
*G02B 21/08* *(2006.01)*     *G02B 27/10* *(2006.01)*

(86) Internationale Anmeldenummer:
**PCT/EP1999/004431**

(87) Internationale Veröffentlichungsnummer:
**WO 2000/008510 (17.02.2000 Gazette 2000/07)**

(54) **MIKROSKOP MIT AUFLICHTEINKOPPLUNG**

MICROSCOPE WITH INCIDENT LIGHT SOURCE

MICROSCOPE A INJECTION DE LUMIERE INCIDENTE

(84) Benannte Vertragsstaaten:
**DE FR GB IT**

(30) Priorität: **04.08.1998 DE 19835073**

(43) Veröffentlichungstag der Anmeldung:
**19.07.2000 Patentblatt 2000/29**

(73) Patentinhaber: **CARL ZEISS JENA GmbH**
**07745 Jena (DE)**

(72) Erfinder:
• **CZARNETZKI, Norbert**
  **D-07747 Jena (DE)**
• **SCHERÜBL, Thomas**
  **D-07745 Jena (DE)**
• **MATTHÄ, Manfred**
  **D-07747 Jena (DE)**

(56) Entgegenhaltungen:
DE-A- 3 924 702     DE-A- 19 511 937
GB-A- 2 272 980     US-A- 4 251 158
US-A- 5 801 882

**Beschreibung**

Die Erfindung bezieht sich auf ein Mikroskop mit Auflichteinkopplung, wobei das zur Auflichtbeleuchtung vorgesehene Licht auf die teilreflektierende Schicht eines Strahlteilerwürfels und von dort durch das Mikroskopobjektiv auf die Probe gerichtet ist, während das von der Probe reflektierte und/oder emittierte Licht zur teilreflektierenden Schicht zurück und durch diese hindurch in den Abbildungsstrahlengang gelangt.

Die Qualität von im Auflicht erzeugten Abbildungen wird - viel mehr als bei Durchlichtbeleuchtungen - geprägt durch die Beherrschung der z.T. stark störenden Reflexe von optischen Elementen im gemeinsam zur Beleuchtung und Abbildung genutzten Strahlengang. Deshalb ist beim optischen Design konsequent für jedes Element bzw. jede Oberfläche im Strahlengang sicherzustellen, daß dessen Rückreflex geschwächt wird, etwa durch Entspiegelung der Oberfläche für den relevanten Spektralbereich und/oder sich die Lage des Reflexbildes der Leuchtquelle (von jeder Oberfläche) weit entfernt von Bildebenen befindet.

Die bekannten Maßnahmen zur Beseitigung von Oberflächenreflexen an den Objektiven des Primärtubus betreffen vor allem die breitbandige Entspiegelung aller Linsenoberflächen eines gefaßten Objektivsystems. Beim modernen Design von hochwertigen Objektiven für Auflichtapplikationen werden generell die Krümmungen der Einzellinsen den heutigen Bedürfnissen zur Reflexarmut im Zwischenbild angepaßt - neben den klassischen Anforderungen an das abbildende System zur Erzielung einer beugungsbegrenzten Übertragung der Objektebene in die Bildebene. Dabei werden bei den meisten Mikroskopherstellern die Mikroskopobjektive bildseitig auf unendlich korrigiert, d.h. es wird eine ebene Wellenfläche erzeugt, die erst durch die Tubuslinse eine reelle Abbildung des Objektes in die Zwischenbildebene generiert.

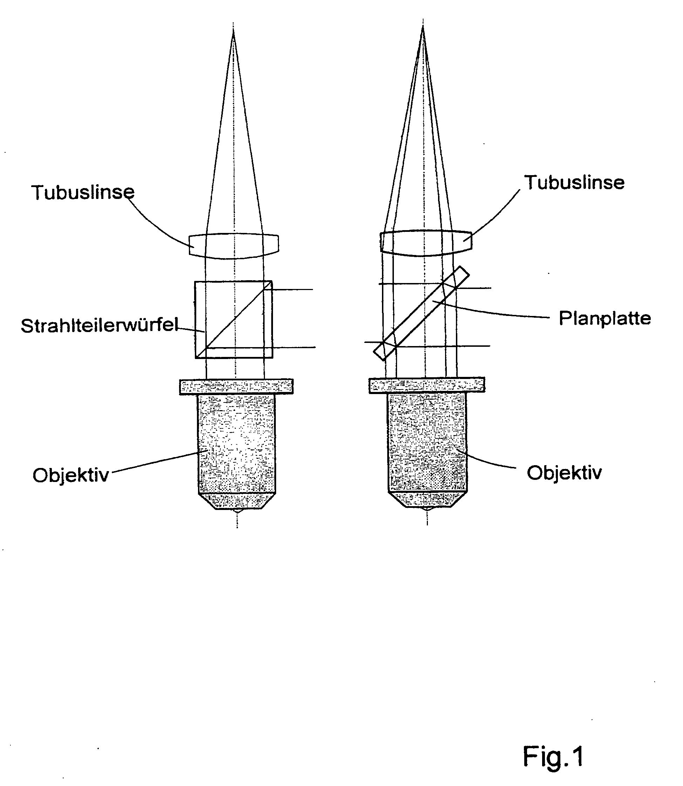

Typisches Vorgehen bei der Einkopplung der Beleuchtungsquelle bei Auflichtapplikationen ist dabei die neutrale, dichroitische oder auch polarisationsoptische Einspiegelung eines parallelisierten Lichtbündels der Beleuchtungsquelle mittels eines ebenen Einkoppelelementes, wie planparallele, beschichtete Teilerplatte oder quadratischer Teilerwürfel. Die übliche Lichteinkopplung erfolgt somit im parallelisierten Unendlichstrahlengang zwischen Objektiv und Tubuslinse. In Fig.1 ist die herkömmliche Anordnung für Auflichtbeleuchtungen im parallelen Strahlengang zwischen Tubuslinse und Objektiv dargestellt.

Probleme ergeben sich bei einer klassischen Auflichteinkopplung im nichtparallelen, endlichen Strahlengang eines Mikroskops. Bei einer Einkopplung über eine schräg gestellte Planplatte werden Abberationen erzeugt, wodurch diese Art der Lichteinspiegelung für hochwertige optische Systeme nicht geeignet ist. Andererseits erzeugt die Einkopplung über einen Strahlteilerwürfel zwischen Bildebene und Tubuslinse im allgemeinen einen relativ starken Rückreflex an der unteren Planfläche des Strahlteilerwürfels. Sämtliche Planflächen und viele relativ schwach gekrümmte optische Flächen, wie z.B. die Flächen der üblicherweise recht langbrennweitigen Tubuslinse, erzeugen bei Auflichtbeleuchtung störende Reflexe, die den Bildkontrast und die Abbildungsqualität mindern.

Insbesondere bei neueren Mikroskopierverfahren jedoch bietet eine Auflichteinkopplung zwischen Tubuslinse und Zwischenbildebene spezielle Vorteile, so z.B. im Hinblick auf die Platzausnutzung im Primärtubus des Mikroskops, woraus sich ein besonderes Bedürfnis zur Lösung der oben genannten Probleme ergibt.

Eine Anordnung zur reflexarmen Einkopplung der Beleuchtungsquelle bei einem parallel konfokalen Auflichtmikroskop ist in DE 19511937 C2 beschrieben. Hierbei wird die neutrale, dichroitische oder auch polarisationsoptische Einspiegelung der Beleuchtungsquelle oberhalb der Zwischenbildebene vorgenommen und zur Verhinderung von störenden Reflexen des ebenen Einkoppelelementes ein rhombisch angeschnittener Teilerkörper genutzt. Zur Verminderung des Fehlereinflusses des Rhombus bei der Bildentstehung im Abbildungsstrahlengang werden Kompensationskeile jeweils vor und hinter der Zwischenbildebene benötigt. Die Nipkowscheibe, das Konfokalelement im Beleuchtungs- und Abbildungsstrahlengang, befindet sich in der Zwischenbildebene und wird, ebenfalls zur Vermeidung störender Reflexe an diesem Element, breitbandig entspiegelt und leicht geneigt im Strahlengang angeordnet.

Eine weitere Lösung zur Beseitigung des störenden Einflusses von Oberflächen ebener Teilerelemente wird in DE 4446134 A1 beschrieben, wo in einer interferometrischen Meßanordnung zur Augenlängenmessung sehr schwache Reflexe vom Augenhintergrund detektiert werden müssen. Dabei werden zur Einkopplung der Beleuchtung (Halbleiterlaser) sowie zur Erzeugung eines Referenzstrahlenganges des interferometrischen Meßprinzips entweder rhomboidisch geformte ebene Teilerelemente oder leicht windschiefe, aber ebene Körper als Teilerelemente benutzt. Diese Elemente sind schwierig in der Handhabung sowohl bei der Herstellung als auch der Justierung in der Gesamtanordnung.

Bei dem deutschen Patent DE 19714221 werden (anders als in dem o. g. DE 19511937 C2) zur Verhinderung starker Störreflexe aus der Beleuchtung zwei Konfokalscheiben mit Pinholearrays benutzt, um die primären Beleuchtungsreflexe gar nicht in den Abbildungszweig gelangen zu lassen. Dies erfolgt um den Preis einer aufwendigen Justierung zur Herstellung der Konjugation vom Beleuchtungsarray zum Pinholearray.

In US 5801882 wird ein Linsensystem eines Suchers für eine Kamera mit einem Strahlteiler beschrieben, an dem eine negative gekrümmte Linse integriert ist.
In DE 3924702 A wird ein Strahlteiler für Mikroskope beschrieben, der eine konvexe Eintrittsfläche und konkave Austrittsflächen aufweist.

Von diesem Stand der Technik ausgehend liegt der Erfindung die Aufgabe zugrunde, bei einem Mikroskop der vorbeschriebenen Art durch Verringerung des Falschlichteinflusses die Bildqualität und damit die Gebrauchswerteigenschaften zu verbessern.

Die Aufgabe der Erfindung wird bei einem Mikroskop nach dem Oberbegriff des Hauptanspruchs durch die kennzeichnenden Merkmale des Anspruchs 1 gelöst. Bevorzugte Weiterbildungen sind Gegenstand der abhängigen Ansprüche.

Aufgrund der an den Strahlteilerwürfel angearbeiteten sphärischen Flächenkrümmung wirkt dieser wie eine Plankonkavlinse, wodurch die Rückreflexe der Auflichtbeleuchtung in der Zwischenbildebene reduziert werden, denn durch die angearbeitete Konkavfläche am Teiler wird der Lichtreflex dieser Fläche stark gemindert.

Dieser Effekt wird dadurch verstärkt, daß eine Kombination aus einer Zerstreuungslinse und einer Sammellinse vorgesehen ist, wobei die Flächenkrümmungen der Zerstreuungslinse und der Sammellinse und die an den Strahlteilerwürfel angearbeitete negative sphärische Krümmung so aufeinander abgestimmt sind, daß die Rückreflexe der Auflichtbeleuchtung in der Zwischenbildebene auf ein Minimum beschränkt werden. Das wird erreicht durch gezielte und definierte Erhöhung der Radienkrümmungen der beiden Linsen und der gekrümmten Fläche am Strahlteilerwürfel. Dabei wirkt der Teilerkörper optisch wie eine dicke Plankonkavlinse (Negativlinse). Die Zerstreuungslinse, die Sammellinse und die an den Strahlteilerwürfel angearbeitete negative sphärische Krümmung ersetzen die herkömmlicherweise vorgesehene Tubuslinse.

Erfindungsgemäß ist in einer weiteren Ausgestaltungsvariante vorgesehen, daß die Zerstreuungslinse - zum Zweck der Erzielung stark gekrümmter Radien - als durchgebogene Negativlinse (Bikonkavlinse) und die Sammellinse als Bikonvexlinse ausgebildet sind, die beide wie vorbeschrieben mit der anpolierten Konkavfläche am Strahlteilerwürfel zusammenwirken. Dabei wird der negativen optischen Wirkung des Strahlteilers und der Lichtbündelaufweitung durch die vorangestellte Zerstreuungslinse mit einer erhöhten positiven Brechkraft der Sammellinse kompensierend entgegengewirkt.

Diese Erhöhung der Brechkraft der Sammellinse führt zu größeren Flächenkrümmungen an den betreffenden optischen Elementen und damit zu einem wesentlich stärkeren Zerstreuungsverhalten im Hinblick auf die resultierenden Rückreflexe.

Auf diese Weise werden durch zwei relativ stark gekrümmte Zerstreuungslinsen und eine relativ stark gekrümmten Sammellinse, die als Ersatztubuslinse zusammenwirken, die Nachteile einer Auflichteinkopplung weitgehend beseitigt. Während Lichteinkopplungen zwischen Tubuslinse und Mikroskopzwischenbild mit herkömmlichen Mitteln (normaler Teiler und Tubuslinse) zu nicht vertretbaren Falschlichtproblemen führt, bietet die beschriebene Anordnung die Möglichkeit einer wesentlich verbesserten Unterdrückung störender Reflexe.

Darüber hinaus werden mit dieser Anordnung Möglichkeiten zur Erweiterung der Funktionalität des optischen Primärtubus erschlossen. So ist erfindungsgemäß vorgesehen, daß sowohl die Sammellinse als auch die Zerstreuungslinse in Richtung Bildebene einzeln oder gemeinsam verschieblich angeordnet sind, wobei infolge der Verschiebung der Abstand beider Linsen zueinander und/oder beider Linsen zur Bildebene veränderbar ist, was eine Veränderung der resultierenden Brennweite zur Folge hat.

Damit sind in einem kleinen Bereich Zoom-Effekte durch Abstandsvariationen erzielbar, wodurch sich Vorteile für solche Applikationen ergeben, bei denen die exakte Kalibrierung der Vergrößerung im mikroskopischen Primärtubus erforderlich ist. Bekanntlich ist aufgrund fertigungsbedingter exemplarischer Streuungen des Vergrößerungsmaßstabes von Objektiven des gleichen Typs und ebenso der Brennweite der Standardtubuslinsen der Vergrößerungsmaßstab des gesamten Primärtubus gewissen Schwankungen unterworfen.

Um den Primärtubus im Maßstab exakt kalibrieren zu können, ist eine Zoom-Eigenschaft des Tubussystems wünschenswert, damit über die Variation der Brennweite der Vergrößerungsmaßstab des gesamten Primärtubus geeicht werden kann. Dazu kann ein bekannter Maßstab über den Primärtubus auf eine Kamera abgebildet und der Vergrößerungsmaßstab gemessen werden. Zur Eichung wird das Tubussystem abgestimmt, d.h. seine Gesamtbrennweite durch Luftabstandsänderungen auf ein geeignetes Maß eingestellt.

Durch Veränderung des Abstandes zwischen der Zerstreuungslinse und der Sammellinse oder durch gemeinsames Verschieben dieser beiden Linsen ist es möglich, in die Gesamtbrennweite (wenn auch in kleinen Grenzen) und damit den Abbildungsmaßstab zu variieren, ohne daß dadurch die Abbildungsqualität wesentlich verschlechtert wird. Die Variation der Gesamtbrennweite erhält man aus der Beziehung:

$$f_a - f_e = \frac{d_a - d_e}{(f_2 + f_1 - d_a)(f_2 + f_1 - d_e)}$$

Die Variation der Schnittweite ergibt sich aus:

$$s_a{}' - s_e{}' = \frac{(f_2 - d_a) \times f_1}{(f_1 + f_2 - d_a)} - \frac{(f_2 - d_e) \times f_1}{(f_1 + f_2 - d_e)}$$

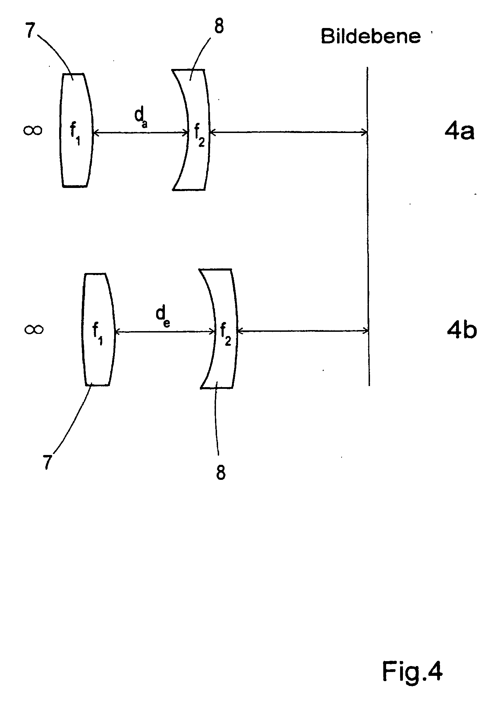

Hierin sind $f_a$ die Gesamtbrennweite vor der Verstellung, $f_e$ die Gesamtbrennweite nach der Verstellung, $f_1$ die Brennweite der Sammellinse, $f_2$ die Brennweite der Zerstreuungslinse, $d_a$ der Abstand zwischen Sammellinse und Zerstreuungslinse vor Verstellung, $d_e$ der Abstand zwischen Sammellinse und Zerstreuungslinse nach Verstellung, $s_a{}'$ die Schnittweite vor und $s_e{}'$ die Schnittweite nach Verstellung (vergl. Fig. 4).

So ist beispielhaft die Möglichkeit einer bedeutenden Applikation zur Erzielung eines exakten optischen Abbildungsmaßstabes in automatisch arbeitenden Inspektionsmaschinen gegeben, in denen der sogenannte "cell-to-cell"-Vergleich vorrangig in periodischen Speicherbausteinen durchgeführt wird.

Bei der optischen Inspektion von periodischen Strukturen in Halbleiterbauelementen werden hohe Produktivitäten bei der Prüfung erreicht, da innerhalb eines Empfängerfeldes gleiche optische Strukturen und damit elektronische Signale auftreten sollten. Die elektronischen Signale können mit einer schnellen Hardware sofort und ohne aufwendige Zwischenspeicherung auf ihre absolute Identität überprüft werden. Diese Verfahrensweise ist aber nur dann zuverlässig, wenn keine Aliasing-Effekte auftreten, d.h. wenn die optische Länge einer frei wählbaren Periodenstruktur subpixelgenau eine ganze Pixelanzahl ergibt. Dies ist optisch nur durch sehr genaue und dynamische Einstellung des Abbildungsmaßstabes der in der Regel differierenden Periodenlänge an Schaltkreisstrukturen unterschiedlicher Integrationsgrade, Hersteller, Technologien o.a. auf die Kameraeigenschaften (Pixelgröße) möglich.

In diesem Zusammenhang sieht eine weitere Ausgestaltung der Erfindung vor, daß die Sammellinse und/oder die Zerstreuungslinse mit einem motorisch angetriebenen Stellglied gekoppelt sind und dieses Stellglied mit einer Einrichtung zur Ausgabe von Stellbefehlen verbunden ist.

Mit Hilfe geeignet ausgelegter motorisch angetriebener Stellglieder ist vorteilhaft eine feinfühlige Verstellung der Zoomeigenschaften im parallel konfokalen Primärtubus eines Inspektionsgerätes möglich. Die dynamische Einstellung des Abbildungsmaßstabes in einer sekundären Abbildung speziell auf einen Empfängerschaltkreis mit konfokalem Charakter (bei einem höchsten Maß an Abberationsfreiheit!) hingegen ist mit höchsten Schwierigkeiten verbunden.

Die Erfindung soll nachfolgend anhand eines Ausführungsbeispieles näher erläutert werden. In den zugehörigen Zeichnungen zeigen

Fig.1    das Prinzip der Auflichteinkopplung nach dem Stand der Technik
Fig.2    das Prinzip der erfindungsgemäßen Auflichteinkopplung
Fig.3    die Anwendung der erfindungsgemäßen Auflichteinkopplung im Zusammenhang mit einer Feldlinse
Fig.4    eine Darstellung zur Veränderung des Fokussierzustandes
Fig.5    eine Anordnung mit veränderlichem Fokussierzustand.

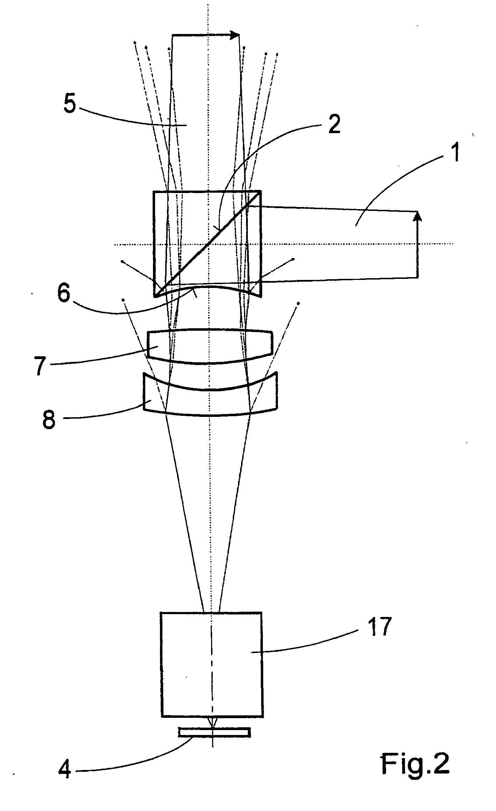

Abweichend von dem in Fig.1 dargestellten und in der Beschreibungseinleitung bereits erläuterten Stand der Technik ist in Fig.2 die Auflichteinkopplung für ein Mikroskop entsprechend der Erfindung dargestellt. Dabei ist der zur Auflichtbeleuchtung vorgesehene Beleuchtungsstrahlengang 1 auf die teilreflektierende Schicht 2 eines Strahlteilerwürfels 3 gerichtet. Die Schrägstellung der teilreflektierenden Schicht 2 bewirkt die Umlenkung des Beleuchtungsstrahlenganges 1 in Richtung auf eine Probe 4. Das von der Probe 4 reflektierte und/oder emittierte Licht gelangt zur teilreflektierten Schicht 2 zurück und durch diese hindurch in den Abbildungsstrahlengang 5.

Erfindungsgemäß weist der Strahlteilerwürfel 3 an seiner der Probe 4 und damit dem Abbildungsobjektiv 17 zugewandten Außenfläche 6 eine negative sphärische Krümmung auf.

Weiterhin sind im Strahlengang zwischen dem Strahlteilerwürfel 3 und dem Abbildungsobjektiv 17 bzw. der Probe 4 eine Sammellinse 7 und eine Zerstreuungslinse 8 angeordnet. Dabei sind die Flächenkrümmungen der Sammellinse 7, der Zerstreuungslinse 8 und die Krümmung der Außenfläche 6 so aufeinander abgestimmt, daß durch ihr Zusammenwirken die störenden sekundären Beleuchtungsreflexe auf ein Minimum unterdrückt werden. Das wird erreicht, indem der beim Durchgang des Abbildungsstrahlenganges aufgrund der Krümmung der Außenfläche 6 als dicke Plankonkavlinse wirkende Strahlteilerwürfel 3 eine negative optische Wirkung hervorruft, ebenso wie die Lichtbündelaufweitung der Zerstreuungslinse 8.

Erfindungsgemäß wird nun der negativen optischen Wirkung des Strahlteilers 3 und der Zerstreuungslinse 8 mit einer relativ hohen Brechkraft der Sammellinse 7 entgegen gewirkt. Die Erhöhung der Brechkraft führt bei der Sammellinse 7 zu größeren Flächenkrümmungen und damit zu dem angestrebten erhöhten Zerstreuungsverhalten der Rückreflexe. Damit sind die Nachteile des Standes der Technik bei der Auflichteinkopplung zwischen Tubuslinse und Bildebene weitestgehend beseitigt.

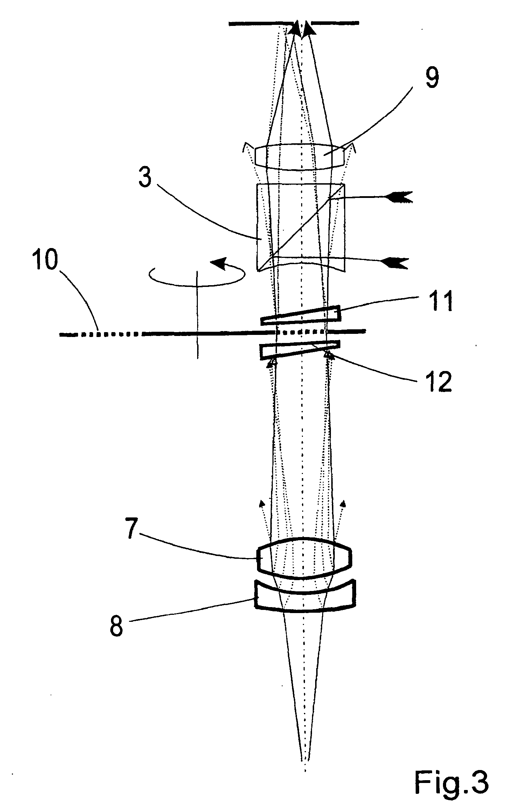

In Fig.3 ist der Aufbau der erfindungsgemäßen Anordnung anhand eines Beispieles mit einer Nipkowscheibe als Konfokalelement im Beleuchtungs- und Abbildungsstrahlengang dargestellt, bei dem die negativ gekrümmte Außenfläche 6 am Strahlteilerwürfel 3 mit einer Feldlinse 9 als Ersatzfeldlinse zusammenwirkt. Auch hier sind eine Sammellinse 7 und eine Zerstreuungslinse 8 vorgesehen, wobei im Strahlengang zwischen dem Strahlteilerwürfel 3 und der Sammellinse 7 die Nipkowscheibe 10 geneigt in der Zwischenbildebene angeordnet ist und wobei der Nipkowscheibe 10 ein Keilpaar 11, 12 zugeordnet ist.

Fig.4 zeigt beispielhaft den Fokussierzustand mit Hilfe der Zerstreuungslinse 8 und der Sammellinse 7. Bei 4a wie auch bei 4b hat die Sammellinse 7 die Brennweite $f_1$, die Zerstreuungslinse 8 die Brennweite $f_2$. Durch Variation des Abstandes d zwischen der Sammellinse 7 und der Zerstreuungslinse 8 bzw. durch gleichzeitiges Verschieben der Linsengruppe aus Sammellinse 7 und Zerstreuungslinse 8 ist es möglich, die Gesamtbrennweite in kleinen Grenzen zu variieren und damit den Abbildungsmaßstab zu verändern, ohne dabei die Abbildungsqualität wesentlich zu verschlechtern.

Die Variation der Gesamtbrennweite ergibt sich aus $\Delta f = f_a - f_e$ und die Variation der Schnittweite aus $\Delta s = s_a - s_e$ entsprechend der auf Seite 7 der Beschreibung angegebenen Beziehungen, wo auch der Einfluß der Brennweiten $f_1$, $f_2$ und des Abstandes d bei der Variation von Gesamtbrennweite und Schnittweite ausführlich dargestellt ist.

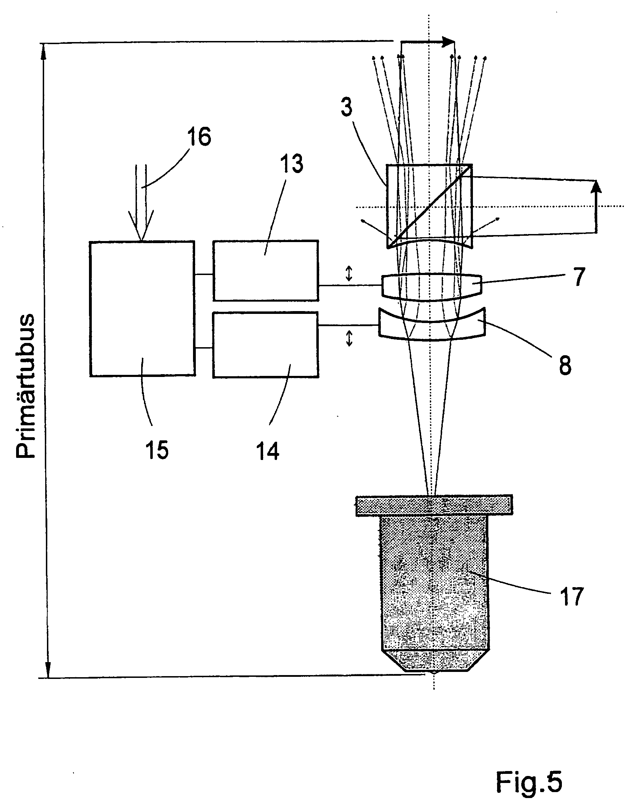

In Fig.5 ist ein Anwendungsbeispiel zur Variation der Brennweite durch Veränderung der Abstände zwischen Sammellinse 7 und Zerstreuungslinse 8 bzw. des Abstandes zwischen Sammellinse 7 und Zerstreuungslinse 8 und dem Strahlteilerwürfel 3 dargestellt. Hier ist die Sammellinse 7 mit einem Stellglied 13 gekoppelt, die Zerstreuungslinse 8 mit einem Stellglied 14. Beide Stellglieder 13 und 14 sind mit einer Ansteuereinheit 15 verbunden, die über ein Eingabemodul 16 zur Eingabe von Stellbefehlen verfügt.

Bei Eingabe von Stellbefehlen über das Eingabemodul 16 (manuell oder automatisch) wird über die Ansteuereinheit 15 und die Stellglieder 13 bzw. 14 eine Verschiebung der Sammellinse 7 und/oder der Zerstreuungslinse 8 veranlaßt, die sich dabei auf einer Geradführung in Richtung Strahlengang bewegen. Dabei werden die Gesamtbrennweite und die Schnittweite entsprechend der vorgenannten Beziehung verändert. Auf diese Weise sind mit dieser Anordnung Möglichkeiten zur Erweiterung der Funktionalität des optischen Primärtubus im Sinne einer exakten Kalibrierung der Vergrößerung erschließbar.

**Bezugszeichenliste**

| | | |
|---|---|---|
| 1 | | Beleuchtungsstrahlengang |
| 2 | | teilreflektierende Schicht |
| 3 | | Strahlteilerwürfel |
| 4 | | Probe |
| 5 | | Abbildungsstrahlengang |
| 6 | | negativ gekrümmte Außenfläche |
| 7 | | Sammellinse |
| 8 | | Zerstreuungslinse |
| 9 | | Feldlinse |
| 10 | | Nipkowscheibe |
| 11, 12 | | Keilpaar |
| 13, 14 | | Stellglieder |
| 15 | | Ansteuereinheit |
| 16 | | Eingabemodul |
| 17 | | Abbildungsobjektiv |
| 21 | | Lichtquelle |
| 22 | | Umlenkspiegel |
| 23 | | Gestell |
| 24 | | Geradführung |
| 25, 26, 27, 28 | | elektromechanische Antriebe |
| 29 | | Einrichtung für Stellbefehle |
| 30 | | Eingabemodul |

**Patentansprüche**

1. Mikroskop mit Auflichteinkopplung, bei dem das zur Auflichtbeleuchtung vorgesehene Licht auf die teilreflektierende Schicht (2) eines Strahlteilerwürfels (3) und von dort über das Abbildungsobjektiv auf eine Probe (4) gerichtet ist, während das von der Probe (4) reflektierte und/oder emittierte Licht zur teilreflektierenden Schicht (2) zurück und durch diese hindurch in den Abbildungsstrahlengang (5) gelangt, wobei der Strahlteilerwürfel (3) an seiner dem Abbildungsobjektiv zugekehrten Außenfläche (6) eine negative sphärische Krümmung aufweist, **dadurch gekennzeichnet, daß** im Tubuslinsensystem des Mikroskops zwischen dem Abbildungsobjektiv und dem Strahlteilerwürfel (3) eine Sammellinse (7) und eine Zerstreuungslinse (8) vorgesehen sind, wobei die Zerstreuungslinse (8) zusätzlich zur gekrümmten Außenfläche (6) des Strahlteilerwürfels (3) eine Lichtbündelaufweitung bewirkt, die positive Brechkraft der Sammellinse (7) dieser Lichtbündelaufweitung entgegenwirkt und **dadurch** sekundäre Beleuchtungsreflexe auf ein Minimum beschränkt sind.

2. Mikroskop nach Anspruch 1, bei dem ein Konfokalelement in der Zwischenbildebene angeordnet ist, **dadurch gekennzeichnet, daß** im Tubuslinsensystem eine Zerstreuungslinse (8) und eine Sammellinse (7) und im Abbildungsstrahlengang (5) eine Feldlinse (9) vorgesehen sind, wobei die Flächenkrümmungen der Sammellinse (7), der Zerstreuungslinse (8), der durch die Flächenkrümmung als Plankonkavlinse wirkenden Strahlteilerwürfels (3) und der Feldlinse (9) so aufeinander abgestimmt sind, daß sekundäre Beleuchtungsreflexe auf ein Minimum beschränkt sind.

3. Mikroskop nach einem der vorgenannten Ansprüche, **dadurch gekennzeichnet, daß** die Sammellinse (7) als Bikonvex- und Zerstreuungslinse (8) als Bikonkavlinse ausgebildet ist.

4. Mikroskop nach einem der vorgenannten Ansprüche, **dadurch gekennzeichnet, daß** sowohl die Sammellinse (7) als auch die Zerstreuungslinse (8) in Richtung Bildebene einzeln oder gemeinsam verschieblich angeordnet sind, wobei infolge der Verschiebung der Abstand beider Linsen (7, 8) zueinander und/oder beider Linsen (7, 8) zur Bildebene veränderbar ist, was eine Veränderung der resultierenden Brennweite zur Folge hat.

5. Mikroskop nach Anspruch 5, **dadurch gekennzeichnet, daß** die Sammellinse (7) und/oder die Zerstreuungslinse (8) mit motorisch angetriebenen Stellgliedern (13, 14) gekoppelt und über diese mit einer Ansteuereinheit (15) sowie mit einem Eingabemodul (16) zur Eingabe von Stellbefehlen verbunden sind.

## Claims

1. Microscope having incident light input-coupling, in which the light provided for incident illumination is directed onto the partially reflective layer (2) of a beam splitter cube (3) from where it is directed onto a sample (4) via the imaging objective, whereas the light emitted and/or reflected from the sample (4) passes back to the partially reflective layer (2) and through this into the imaging beam path (5), wherein the outer surface (6), facing the imaging objective, of the beam splitter cube (3) has a negative spherical curvature, **characterised in that** a converging lens (7) and a diverging lens (8) are provided between the imaging objective and the beam splitter cube (3) in the tube lens system of the microscope, wherein the diverging lens (8), in addition to the curved outer surface (6) of the beam splitter cube (3), effects the expansion of a light bundle, the positive refractive power of the converging lens (7) counteracts this light bundle expansion and consequently secondary illumination reflections are minimised.

2. Microscope as claimed in Claim 1, in which a confocal element is disposed in the intermediate image plane, **characterised in that** a diverging lens (8) and a converging lens (7) are provided in the tube lens system and a field lens (9) is provided in the imaging beam path (5), wherein the surface curvatures of the converging lens (7), of the diverging lens (8), of the beam splitter cube (3), which acts as a plano-concave lens owing to the surface curvature, and of the field lens (9) are adapted to each other in such a manner that secondary illumination reflections are minimised.

3. Microscope as claimed in any one of the preceding Claims, **characterised in that** the converging lens (7) is formed as a biconvex lens and the diverging lens (8) is formed as a biconcave lens.

4. Microscope as claimed in any one of the preceding Claims, **characterised in that** both the converging lens (7) and the diverging lens (8) are disposed so as to be displaceable, individually or together, in the direction of the image plane, wherein owing to the displacement the distance of the two lenses (7, 8) with respect to each other and/or of the two lens (7, 8) with respect to the image plane can be altered which causes a change in the resulting focal length.

5. Microscope as claimed in Claim 5 [*sic*], **characterised in that** the converging lens (7) and/or the diverging lens (8) are coupled to motor-driven-actuating elements (13, 14.), and are connected, via the actuating elements, to a control unit (15) and to an input module (16) for the purpose of inputting actuating instructions.

**Revendications**

1. Microscope à injection de lumière incidente, dans lequel la lumière prévue pour l'éclairage incident est dirigée sur la couche partiellement réfléchissante (2) d'un cube diviseur de rayons (3) et de là par objectif de reproduction sur un échantillon (4), pendant que la lumière réfléchie et/ou émise par l'échantillon (4) retourne à la couche partiellement réfléchissante (2) et arrive à travers celle-ci dans la marche des rayons de reproduction (5), où le cube diviseur de rayons (3) présente à sa face extérieure (6) orientée vers l'objectif de reproduction une courbure sphérique négative, **caractérisé en ce que** sont prévues dans le système de lentilles du tube du microscope entre l'objectif de reproduction et le cube diviseur de rayons (3) une lentille convergente (7) et une lentille convergente (8), où la lentille divergente (8), en plus de la face extérieure courbée (6) du cube diviseur de rayons (3), provoque un élargissement du faisceau lumineux, la puissance de réfraction positive de la lentille convergente (7) s'oppose à cet élargissement du faisceau lumineux et de ce fait, des réflexes d'éclairage secondaires sont limités à un minimum.

2. Microscope selon la revendication 1, dans lequel un élément à foyer commun est disposé dans le plan de l'image intermédiaire, **caractérisé en ce que** sont prévues dans le système de lentilles du tube une lentille divergente (8) et une lentille convergente (7) et dans la marche des rayons de reproduction (5) une lentille de champ (9), où les courbures de face de la lentille convergente (7), de la lentille divergente (8), du cube diviseur de rayons (3) agissant comme lentille plan-concave en raison de la courbure de face et de la lentille de champ (9) sont accordées de telle sorte les unes aux autres que des réflexes d'éclairage secondaires sont limités à un minimum.

3. Microscope selon l'une des revendications précédentes, **caractérisé en ce que** la lentille convergente (7) est réalisée comme lentille bi-convexe et la lentille divergente (8) comme lentille bi-concave.

4. Microscope selon l'une des revendications précédentes, **caractérisé en ce qu'**à la fois la lentille convergente (7) et la lentille divergente (8) sont disposées dans le sens du plan de l'image d'une manière déplaçable individuellement ou conjointement, où par suite du déplacement, l'écart des deux lentilles (7, 8) l'une relativement à l'autre et/ou des deux lentilles (7, 8) au plan de l'image peut être modifié ce qui entraîne une modification de la distance focale qui en résulte.

5. Microscope selon la revendication 4, **caractérisé en ce que** la lentille convergente (7) et/ou la lentille divergente (8) sont couplées avec des organes de positionnement (13, 14) entraînés par moteur et sont reliées par ceux-ci à une unité de commande (15) et à un module d'entrée (16) pour l'entrée de commandes de positionnement.

Tubuslinse

Tubuslinse

Strahlteilerwürfel

Planplatte

Objektiv

Objektiv

Fig.1

Fig.2

Fig.3

7

8

Bildebene

∞   $f_1$   $d_a$   $f_2$   4a

∞   $f_1$   $d_e$   $f_2$   4b

7

8

Fig.4

Primärtubus

16

13

3

15

14

7

8

17

Fig.5